# EUROPEAN PATENT APPLICATION

(11) **EP 4 130 906 A1**
(43) Date of publication of application: **08.02.2023**
(21) Application number: 21189165.0
(22) Date of filing: 02.08.2021
(51) Int. Cl.: G05B 19/418

(54) **DIGITAL TWINS FOR QUALITY MEASUREMENTS OF INDUSTRIAL SERVICES AND APPLICATIONS IN A COMMUNICATION SYSTEM**

(71) Applicant: Siemens Aktiengesellschaft, 80333 München (DE)
(72) Inventor: Frank, Reinhard, 81369 München (DE); Zeiger, Florian, 85635 Höhenkirchen-Siegertsbrunn (DE)

(57) **Abstract**

The invention discloses an automated method for operating a communication system,
- whereby first digital twins (DT1) of software-based applications running on the communication system and of corresponding hardware of the communication system configured to run the applications are continuously updated based on in the communication system measured communication related parameters,
- whereby the communication system is parameterized correspondingly to the updated first digital twins, and
- whereby the communication system comprises a control module (CM) configured to control an industrial device (S&A, M) .

The invention further discloses a corresponding arrangement.

## Description

### FIELD OF THE INVENTION

The present invention relates to an automated method for operating a communication system, whereby the communication system comprises a control module configured to control an industrial device. A corresponding arrangement com prising the communication system is disclosed as well.

### BACKGROUND OF THE INVENTION

Industrial Services (= industrial applications) means service to customers engaged primarily in a process which creates or changes raw or unfinished materials into another form or product including the generation of electric power. Industrial applications include IT, OT and communication/data related applications as well.

A typical approach for service quality assessment in IT systems is the measurement of the quality in end-2-end (e2e) fashion. Therefore, either packet generators create a traffic profile that represents the application/service and injects this data packet stream at the application endpoint. Data packets then travel to the destination (the service endpoint) and the received data stream can be measured.

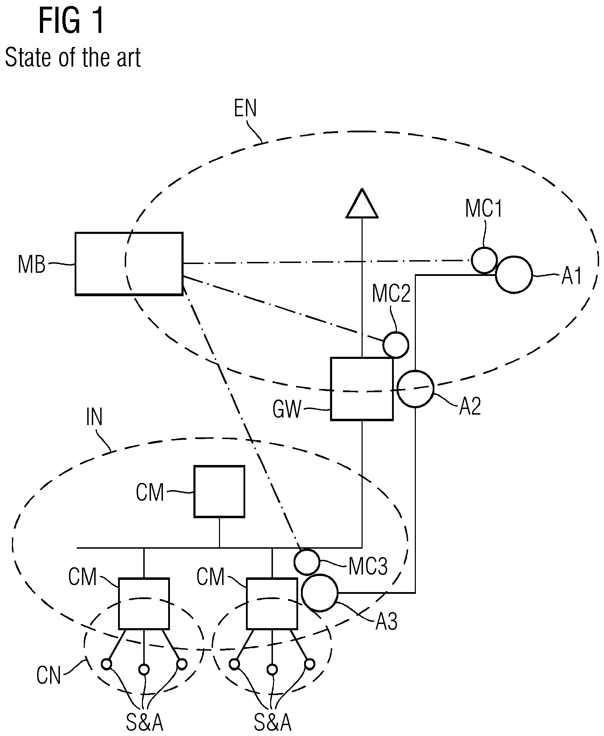

FIG. 1 shows a block diagram of a typical setup for measurement of injected data traffic profiles into a communication system. The communication system comprises an industrial communication network IN, which is connected via at least one communication gateway module GW with an external communication network EN, e.g., a wide area network (WAN). The gateway module GW is not just an interface it comprises a computational device, e.g., a terminal computer, as well. The external network EN comprises enterprise II network, enterprise cloud and/or internet/world wide web.

The industrial communication network IN comprises controller modules CM, e.g., programable logic controllers (PLC), which are the interface to a control network CN, for communicating with the connected sensors and actuators S&A of an industrial device, e.g., electrical motors.

The external network EN comprises at least one first application endpoint A1 causing data traffic in the communication system. As well does a second application endpoint A2 at the level of the gateway module GW and the third application endpoint A3 at the level of the industrial network IN.

At the first application endpoint A1 a first measurement client module MC1 can record pre-defined data traffic profiles in the communication system. At the second application endpoint A2 a second measurement client module MC2 can record and inject pre-defined data traffic profiles in the communication system. At the third application endpoint A3 a third measurement client module MC3 can inject pre-defined data traffic profiles in the communication system. All measurement client module MC1 - MC3 are connected with a measurement backend module MB which is for example set-up in the external network EN and is responsible for gathering and analysing the measurement date from the measurement client modules MC1 - MC3 and for controlling the measurement client module MC 1 - MC3.

Just measuring data streams does not allow for a real assessment of the application/service quality from a user perspective - additional parameters need to be acquired. Injecting static data profiles for measurements does not reflect the dynamic behaviour of the communication system. Approaches according to state-of-the-art use application data profiles and generate data traffic according to the application profile. Thus, network performance can easily be analysed, but application and service performance usually cannot be assessed with only the network performance data. Here, additional knowledge about application and service performance are needed.

### SUMMARY OF THE INVENTION

The objective of the present invention is to provide a solution for better quality measurements of industrial services/applications compared to state of the art.

To accomplish the objective, the disclosure provides a solution according to the independent claims. Advantageous embodiments are provided in the dependent claims.

According to an aspect of the invention, the use of digital twins for quality measurements of industrial service quality is proposed. A digital twin of the application is installed at the corresponding application endpoint and uses the "real" communication system to communicate with its endpoints (or digital twin of the endpoints). The digital twin has an interface to exchange log data of the application with a measurement backend system. Thus, a runtime analysis of the system is possible before the real physical system is started up.

Thus, not only the data communication parameters and KPIs are considered, but also the behaviour of the application is monitored. The measurement backend aggregates the collected application data and communication/control network data.

Quality of service (QoS) is the description or measurement of the overall performance of a service, such as a telephony or computer network or a cloud computing service, particularly the performance seen by the users of the network. To quantitatively measure quality of service, several related aspects of the network service are often considered, such as packet loss, bit rate, throughput, transmission delay, availability, jitter, etc.

The proposed method relies on two subsystems. One is responsible for measuring the network performance, as for example disclosed in the posterior published European patent application 20191385.2. The second subsystem is the core of the disclosure and uses digital twins of the industrial devices and applications. These virtual instances of the industrial process components have the identical configurations and behaviours of their representatives in the real world.

Thus, they have the same QoS requirements, and they must use similar communication and control interfaces for inter-component communication. The digital twin also allows for easy extraction of process performance data (Example: for a motor controller this can be the timelines of RPM set points and the "real" RPM values achieved by the digital twin).

The digital twin can be implemented as virtualized instance, so that it can be deployed at appropriate network locations more easily, or as instance on a physical box (like a physical measurement device).

Advantages of the disclosed invention are:
- Robust coupling of network behavior.
- Mapping of the behavior of real components in the digital world, whereby the system component network adopts the behaviors from the real network.
- End-2-end system behavior analysis considering process states and network states.
- Optional: feeding in the real physical behavior (e.g., of sensors, actuators, applications, services) to then observe the effects on the network and the resulting overall system behavior.
- Independent system analysis without damaging the real physical system.

The invention discloses an automated method for operating a communication system, whereby first digital twins of software-based applications running on the communication system and of corresponding hardware of the communication system configured to run the applications are continuously updated based on in the communication system measured communication related parameters and the communication system is parameterized correspondingly to the updated first digital twins, and whereby the communication system comprises a control module configured to control an industrial device.

Focus of the invention is to update the digital twins by means of real values from the real system and then parameterize applications and communication network accordingly (e.g., if you roll out new apps or change the process).

In a further embodiment the first digital twins are connected with the communication system in such a way that data are exchangeable between the communication system and the first digital twins.

In a further embodiment second digital twins of communication networks of the communication system are provided and continuously updated based on the in the communication system measured communication related parameters and the communication system is parameterized correspondingly to the updated second digital twins.

In a further embodiment the first and second digital twins are a complete digital representation of the communication system.

In a further embodiment the communication networks comprise a wide area network, an industrial network, and a control network comprising the control module.

In a further embodiment the measured communication related parameters comprise measurement data of communication network status, of performance data of the applications and the communication system, and communication system states.

In a further embodiment the measured communication related parameters are captured, stored, and hosted by a measurement backend module.

The invention further discloses an arrangement, comprising:
- a communication system comprising a control module configured to control an industrial device, and
- first digital twins of software-based applications running on the communication system and of corresponding hardware of the communication system configured to run the applications,
- whereby the arrangement is configured to continuously update the first digital twins based on in the communication system measured communication related parameters, and to parameterize the communication system correspondingly (in line, accordingly) to the updated first digital twins.

In a further embodiment of the arrangement the first digital twins are connected with the communication system in such a way that data are exchangeable between the communication system and the first digital twins.

The arrangement further comprises:
- communication networks of the communication system, and
- second digital twins of the communication networks, whereby the arrangement is configured to continuously update the second digital twins based on the in the communication system measured communication related parameters and to parameterize the communication system correspondingly to the updated second digital twins.

In a further embodiment of the arrangement the first and second digital twins are a complete digital representation of the communication system.

In a further embodiment of the arrangement the communication networks comprise a wide area network, an industrial network, and a control network comprising the control module.

In a further embodiment of the arrangement the measured communication related parameters comprise measurement data of communication network status, of performance data of the applications and the communication system, and communication system states.

The arrangement further comprises a measurement backend module configured to capture, store, and host the measured communication related parameters.

The arrangement further comprises a monitoring and decision engine module configured to take care of synchronizing states of components in the communication system and the first and second digital twins.

Further benefits and advantages of the present invention will become apparent after a careful reading of the detailed description with appropriate reference to the accompanying drawings.

### BRIEF DESCRIPTION OF THE DRAWINGS

- FIG. 1: shows a block diagram of a typical setup for measurement of injected data traffic profiles,
- FIG. 2: shows a block diagram of a communication system using digital twins for e2e assessment of industrial service quality,
- FIG. 3: shows a block diagram of a communication system with complete digital representations, incl. network,
- FIG. 4: shows a block diagram of a communication system applied to a motor control embodiment, and
- FIG. 5: shows a flow chart for the automated method applied to the communication system of FIG. 4.

### DETAILED DESCRIPTION OF THE INVENTION

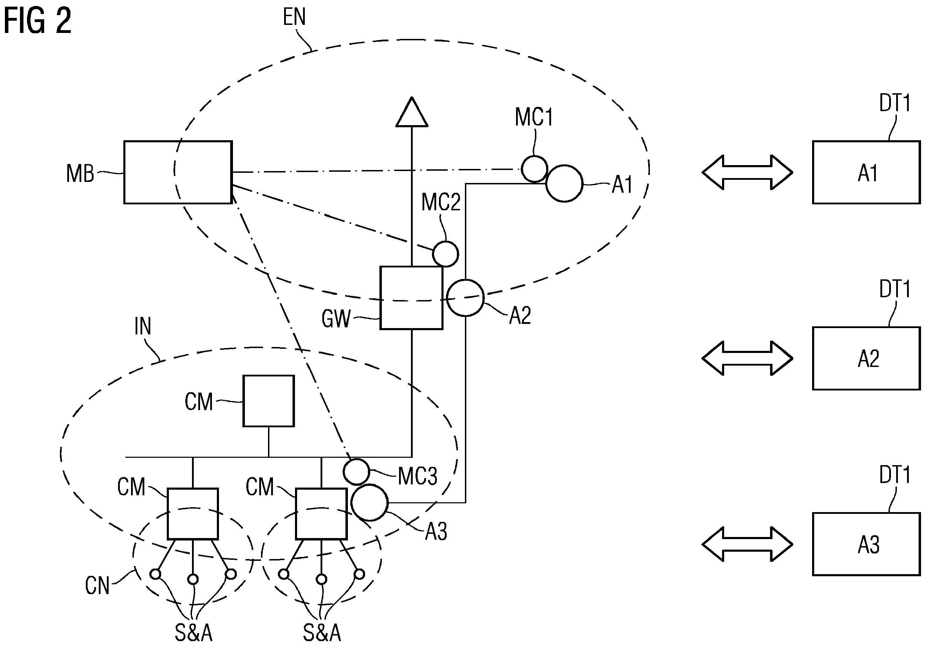

An embodiment of the invention is illustrated by the block diagram of FIG. 2. The arrangement of the embodiment comprises the communication system illustrated in FIG. 1. The arrangement further comprises first digital twins DT1 which are digital representations of the application end points A1 to A3. At the level of application end point A1 the first digital twin DT1 is a representation of an industrial application using the control network CN, at the level of application end point A2 the first digital twin DT1 is an industrial control application communicating with the first digital twins DT1 of the industrial devices (application end point A3), and at the level of the application endpoint A3 the first digital twin DT1 is a digital representation of industrial devices using the control network CN.

The first digital twins DT1 are connected to the communication system, in other words to the "real world" and can therefore simulate components and applications in the real world without harming. Measurement data from the measurement client modules M1 to M3 can then be used to parametrize the first digital twins DT1 and further on the applications and components in the communication system.

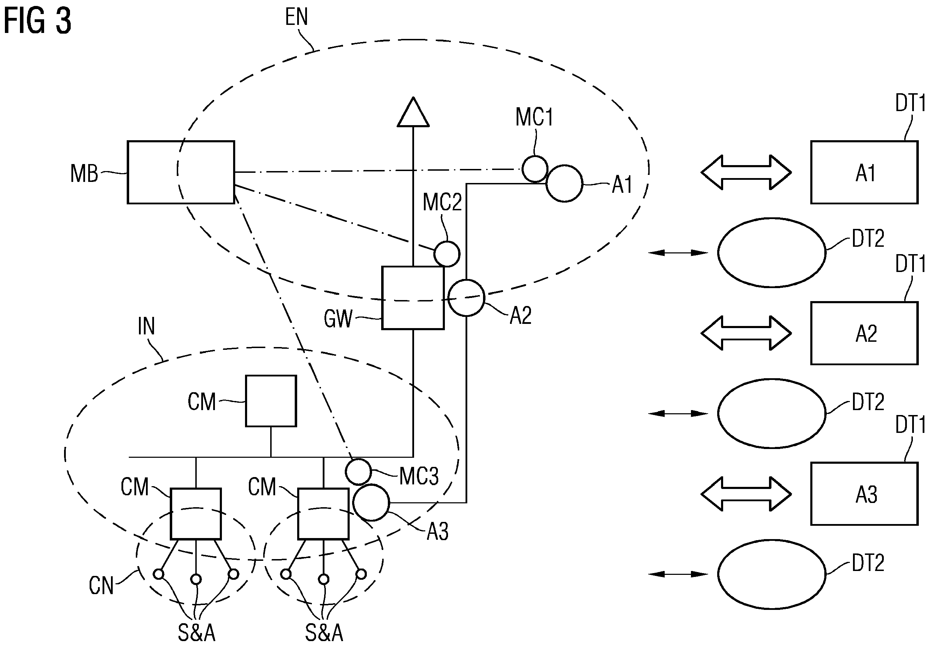

FIG. 3 shows a block diagram of a further embodiment with complete digital representations, including communication networks. In addition to the embodiment of FIG. 2 the arrangement comprises second digital twins DT2, which are digital representations of the external network EN, the industrial network IN and the control network CN. In this embodiment the complete communication system including the communication networks are transferred to the digital world and can simulate and determine the behaviour of the communication system using the first and second digital twins DT1 and DT2.

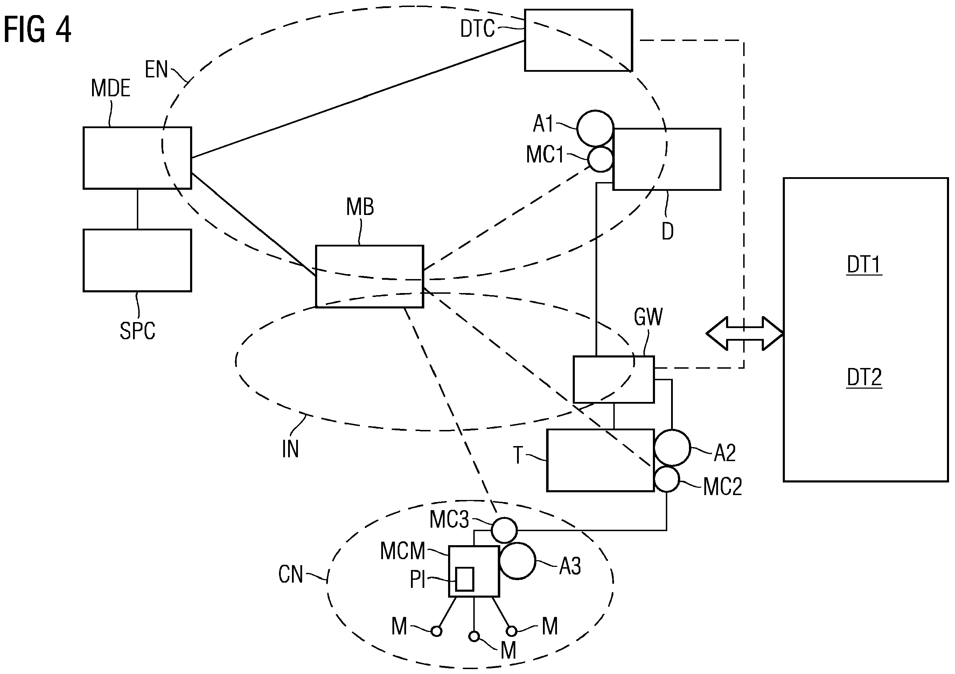

FIG. 4 shows a block diagram of a further embodiment whereby the embodiment of FIG. 3 is applied to a motor control embodiment. The communication system and digital representations according to the embodiment of FIG. 3 is used. Major components of the embodiment are described as follows.

### First Digital twins DT1 (of process)

The first digital twins DT1 are created for industrial applications, control applications and devices. They are identical virtualized setups of their physical representation of a motor control module MCM (e.g., the digital representation of an actuator/motor M uses a mathematical model to calculate the revolutions per minute based on the inputs of the controller), of a terminal T connected to the gateway GW, and a dashboard D in the external network EN. Virtualized means, that they are purely SW and can run either on the edge devices / the edge-cloud or in a dedicated cloud environment that is optimized to host digital twins of networked control systems.

### Process interface module PI

It exists on the physical devices and the virtual representations. It is designed for extracting process data (e.g., voltage, or RPMs of a motor, control set points) and forwarding it to a measurement backend MB, where a monitoring and decision engine module MDE can access component specific states.

### Network digital twin control module DTC

In addition to the typical digital twin as we know it from prior art, the network digital twin control module extracts network parameters from the physical communication system (e.g., via SNMP, or in future systems the assess administration shell - 14.0 Verwaltungsschale) and creates a virtual representation of the network. This component can now be used for runtime analysis and system analysis.

*Runtime analysis:* During runtime, it receives real link characteristics from measurement backend and can adjust these updated parameters in the digital representation - e.g., the real system indicates increasing packet losses on a link and the Network Digital Twin Control module DTC reproduces similar packet losses in the virtual representation of this link.

*System analysis:* In the design and deployment phase of a system it is required to assess system behavior in critical situations (e.g., a communication link break-down , redundancy concepts). Thus, the Network Digital Twin Control module DTC can emulate pre-defined critical situations of communication links and a safe system behavior can be assessed.

### Measurement backend module MB

It is a module where measurement data of the network status, performance data and system states are captured, stored, and hosted. Access to these data is given to other components, such as Monitoring and Decision Engine module DTE and Network Digital Twin Control module DTC. The Measurement backend module MB is fed with data from measurement client modules MC1 bis MC3 and the Process Interface module PI.

### System performance characteristics module SPC

It is a pre-defined description of the system behavior. This description includes the operational envelope of a system, its setpoints, the desired behavior, and error models. The Monitoring and Decision Engine module MDE used the System Performance Characteristics module SPC to assess the system states and the system behavior. The System Performance Characteristics module SPC also support the parameter settings of the used models in the virtual representatives of sensors and actuators.

### Monitoring and decision engine module MDE

It takes care of synchronizing the states of the process components in the physical world and the digital representations. It uses information from the System Performance Characteristics module SPC, the Measurement backend module MB, and the Network Digital Twin Control module NTC.

With these system components now delivering data directly (e.g., via interface) or indirectly (e.g., via measurement client) to the measurement backend module MB, the system analysis is not limited anymore to the analysis of the communication and control network anymore. Thus, also system characteristics (e.g., the response time to increase the RPM (revolutions per minute) of the motor M from 500 to 750) can be considered in the analysis. The proposed system allows even for more.

An optional enhancement is now the transformation of the entire communication system- including all communication channels - into the digital domain. Therefore, the already virtualized process components (digital twins of industrial devices, control applications, and industrial applications) are ready to be cloned to a digital representation of the process in the cloud. In addition, the Network Digital Twin Control module DTC creates virtualized networks, giving an identical representation of all available connectivity in the real process.

With all these components being now available in the digital representation of the process, the digital representation can be initialized by synchronizing with the real system states. The Network Digital Twin Control module NTC is responsible for extracting network status data (retrieved from the measurement backend) and transforming it to be used in the digital representation. The Monitoring and Decision engine module MDE takes care of synchronizing the states of the process components. Now, the digital representation can easily act as reference for a comparator. In addition, parameters of all system components (e.g., changing the behavior of the network/link performance; increasing packet sending cycles on sensors to emulate an alarm) can manually / intentionally be falsified to monitor the system behavior or to triggers special system states of interest.

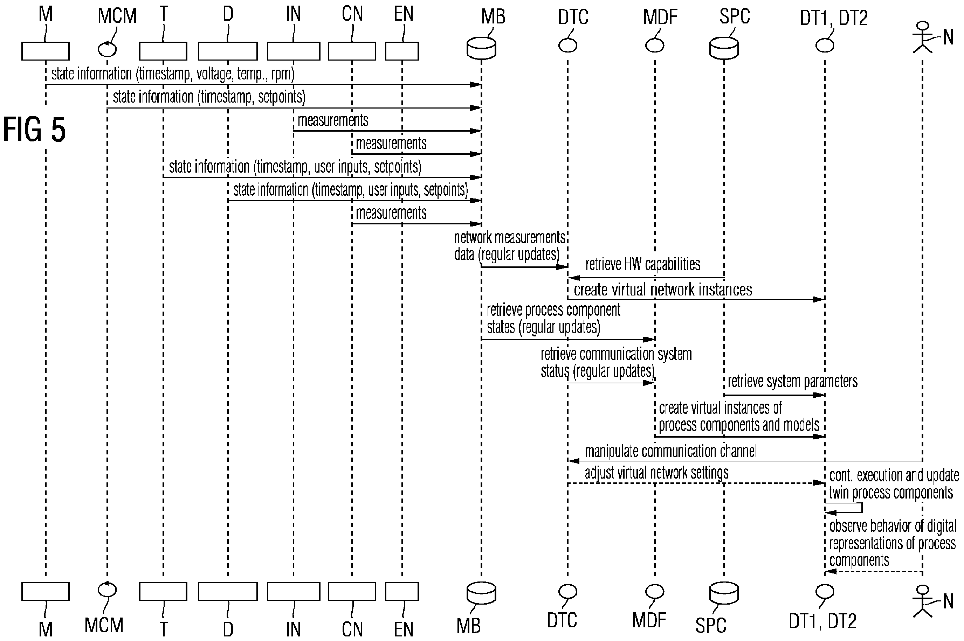

FIG. 5 shows a flow chart for the automated method applied to the arrangement of FIG. 4. The flow chart is self-explaining by following the arrows from left to right and from top to bottom and reading the "step" description above the arrows.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- A1-A3: application end point
- CM: controller module
- CN: control network
- D: dashboard
- DTC: network digital twin control module
- DT1: first digital twin
- DT2: second digital twin
- EN: external network
- GW: communication gateway with computational device
- IN: industrial network
- M: motor
- MB: measurement backend module
- MC1 -MC3: measurement client module
- MCM: motor control module
- MDE: monitoring and decision engine module
- PI: Process interface module
- S&A: sensors and actuators
- SPC: System performance characteristics module
- T: terminal

## Claims

1. An automated method for operating a communication system,
- whereby first digital twins (DT1) of software-based applications running on the communication system and of corresponding hardware of the communication system configured to run the applications are continuously updated based on in the communication system measured communication related parameters,
- whereby the communication system is parameterized correspondingly to the updated first digital twins, and
- whereby the communication system comprises a control module (CM) configured to control an industrial device (S&A, M) .

2. The method according to claim 1,
whereby the first digital twins (DT1) are connected with the communication system in such a way that data are exchangeable between the communication system and the first digital twins (DT1).

3. The method of claim 1 or 2,
- whereby second digital twins (DT2) of communication networks of the communication system are provided and continuously updated based on the in the communication system measured communication related parameters, and
- whereby the communication system is parameterized correspondingly to the updated second digital twins (DT2).

4. The method of claim 3,
whereby the first and second digital twins (DT1 and DT2) are a complete digital representation of the communication system.

5. The method according to claim 3 or 4,
whereby the communication networks comprise a wide area network (EN), an industrial network (IN), and a control network (CN) comprising the control module (CM).

6. The method to one of the previous claims,
whereby the measured communication related parameters comprise measurement data of communication network status, of performance data of the applications and the communication system, and communication system states.

7. The method according to one of the previous claims, whereby the measured communication related parameters are captured, stored, and hosted by a measurement backend module (MB) .

8. An arrangement, comprising:
- a communication system comprising a control module (CM) configured to control an industrial device (M), S&A), and
- first digital twins (DT1) of software-based applications running on the communication system and of corresponding hardware of the communication system configured to run the applications,
- whereby the arrangement is configured to continuously update the first digital twins (DT1) based on in the communication system measured communication related parameters and to parameterize the communication system correspondingly to the updated first digital twins (DT1).

9. The arrangement according to claim 8,
whereby the first digital twins (DT1) are connected with the communication system in such a way that data are exchangeable between the communication system and the first digital twins (DT1) .

10. The arrangement of claim 8 or 9, further comprising:
- communication networks of the communication system, and
- second digital twins (DT2) of the communication networks,
- whereby the arrangement is configured to continuously update the second digital twins (DT2) based on the in the communication system measured communication related parameters and to parameterize the communication system correspondingly to the updated second digital twins.

11. The arrangement of claim 10,
whereby the first and second digital twins (DT1 and DT2) are a complete digital representation of the communication system.

12. The arrangement according to claim 10 or 11,
whereby the communication networks comprise a wide area network (EN), an industrial network (IN), and a control network (CN) comprising the control module (CM).

13. The arrangement of one of claims 6 to 12,
whereby the measured communication related parameters comprise measurement data of communication network status, of performance data of the applications and the communication system, and communication system states.

14. The arrangement according to one of the claims 8 to 13, further comprising:
- a measurement backend module (MB) configured to capture, store, and host the measured communication related parameters.

15. The arrangement according to one of the claims 10 to 14, further comprising:
- a monitoring and decision engine module (MDE) configured to synchronize states of components in the communication system and the first and second digital twins (DT1 and DT2).
